Europäisches Patentamt

European Patent Office

Office européen des brevets

(11) Publication number: **0 473 863 A1**

# EUROPEAN PATENT APPLICATION

(21) Application number: **90830402.5**

(22) Date of filing: **03.09.90**

(51) Int. Cl.5: **F16L 55/124**

(43) Date of publication of application:
**11.03.92 Bulletin 92/11**

(84) Designated Contracting States:
**AT BE CH DE DK ES FR GB GR IT LI LU NL SE**

(71) Applicant: **AZIENDA CONSORZIALE MUNICIPALIZZATA GAS PISA**
**Via Cesare Battisti 71**
**I-56100 Pisa PI(IT)**

(72) Inventor: **Luperi, Moreno**
**S.S. Abetone 23A**
**San Giuliano Terme PI(IT)**

(74) Representative: **Sassatelli, Franco T., Dr.**
**c/o INIP via Ruggi 5**
**I-40137 Bologna(IT)**

(54) **Duct shutter device for work on operating gas canalizations.**

(57) The device uses a spacer support (1) with on its lower end a reinforce sleeve (2) and a unitized body (3) covering the shutter device consisting of an elastic ring (4) interposed between two flanges (5 and 6) with counterposed parts in order to determine, with their gradual pressing feed, the expansion outwards of the said ring (4). While remaining at a safety distance and by acting on the support (1), the operator fits the shutter device into the duct and stabilizes it in a blocking position. By keeping the device in position, with its handle (7), and by means of a proper tool, the operator lets turn the shaft axial componet (8) in its lower part stabilized by means of a crown (9) on flask (10) which assemblies the flange (6) to the distance part (1) and brings the unitized body (3). The rotation of the shaft (8), by means of two conical gears (11 and 12), brings the flange (5) in progressive closure for advancing first in the axial duct (15) of the other flange (6) and then in the duct (16) of the gear (12) thus determining, by expansion outwards of the elastic ring (4) between the opened slanting walls of the two pression flanges (5 and 6), the hermetic seal blocking of the duct.

The invention relates to a mechanic plug shutter device, with a linear distance part, including a device for transmission of the control movement which allows its introduction into the duct and the driving with the operator who stands outside to a range safety from operating area. The patent ground consists in having obtained an improvement of the safety conditions of the operators in the interventions on pressure gas ducts still in operating.

It is well known that in control of gas canalizations, like the conventional ones in a certain area, interventions of many kinds are carried out every day, on low and medium pressure ducts, with small or large diameters, for land accretion, repairs, widening and updating of the plants. These work are so frequent in every day's reality, that the familiarity and established practice lead to undervaluating the risks for the users and the staff carrying out the intervention. In fact, while it is possible to guarantee a sufficient safety for the users operating with the present tools which allow to intervene on the canalizations without interrupting the service, for the operation staff, even with the most valid tools, these interventions cause more risks. In particular, the most delicate and risky operation is the restore of a duct length with operating welding when the flow is momentarily interrupted with balloons or shutter plugs according to the pressures and duct characteristic. The shutter system by means of balloons inflated inside the duct can be used only in the case of low pressures and it is not reliable since these balloons may explode with consequent outflow of gas during the work. The use of ideally conical shape plugs, blocking by compression of a surface annular length of the duct, avoids the above mentioned risks but is it not able to completely prevent the gas outlet particularly owing to interference parts such as pipe scales and possible relief of longitudinal weldings in the duct. The invention enables the solution of the problem by adopting a mechanic plug shutter device, that can be controlled from outside by only one operator, which after having been inserted in the duct in a precluding position, is drived by the same operator so as to block the duct to hermetic seal allowing the intervention in a quite safe condition.

Substantially the device is characterized by an initial linear distance part with a coaxial component 1, for a manual grip, which carries on its end on a reinforce sleeve 2 and unitized body 3, in a lateral position, contains the driving device of an expansion duct shutter device consisting of a circular section elastic ring 4 fitted between the flanges 5 and 6 with truncated cone counterparts to determine, in their gradual pressing feed, the progressive expansion otuwards of the above mentioned ring 4.

While standing at a safety distance the operator, acts on the distance part 1 with both hands, introduces the plug device into the duct and stabilizes it in a shutter position. Holding in position the device the operator, by means of handle 7 turning with the coaxial component 1, with a proper item makes turn around the shaft axial component 8 which is at the bottom stabilized in rotation by means of the crown 9 on flask 10 which assemblies the flange 6 to the said spacer 1 and brings the unitized body 3. The rotation of shaft 8, by means of conical pair gears 11 and 12, brings the flange 5 progressively in closed position for advancing of the threaded part 13 of the shaft 14 which supports it at first in the axial duct 15 of flange 6 and then in coil duct 16 of the gear 12. In this way it is determined, by expansion outwards of the elastic ring 4 between the opened slanting walls of the pression flanges 5 and 6, the hermetic seal blocking of the duct.

In order to take off the device, the shaft 8 is set in rotation in the opposite direction by bringing the flange 5 in opened position and since the shaft 14 is prevented from getting out from the coil duct 16 by the limit control 17. To drive the shaft 8 a wheel 18 has been foreseen.

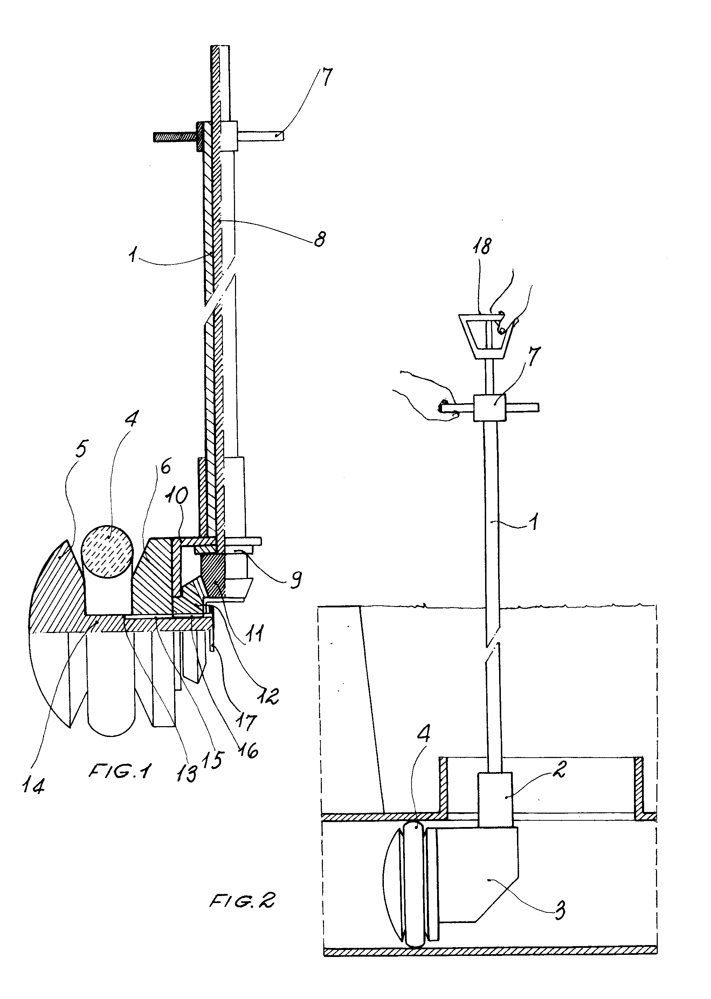

An execution form of the device is illustrated, in a merely indictive and consequently non limiting way of the device, in drawings of Table 1. With reference to this one, fig. 1 is lateral view, partically sectioned, of the only device in opened condition. Fig. 2 is view of the same device in the duct blocking position. The operator's hands can be seen that keep the device in position and contemporarily set in rotation the shaft 8 of the coaxial device for transmitting of the operative control.

In the executions the device can be carried out in the shape and in the components position with possible use of a motor assembly for driving the shaft 8.

Any component may be replaced and/or integrated in different way with others according to the specific use requirements.

## Claims

1. Duct shutter devic for work on operating gas canalizations, characterized by the fact that is used a distance support with coaxial component (1) which brings, on a reinforce sleeve (2) and unitized body (3) which covers the driving mechanism of a shutter device consisting of an elastic ring (4), with circular section, interposed between pair of flanges (5 and 6) with truncated cone counterposed parts to cause, with their gradual pressing feed, the progressive expansion outwards of the above ring (4). While keeping himself at a safety distance and acting on the spacer (1) with both hands, the operator introduces the shutter device into duct and stabilized it in blocking position. Then by keeping the device in position, by means of a handle (7) turning with the coaxial component (1), the operator with a proper tool sets in rotation the shaft axial component (8) in its lower part stabilized in its rotation by means of crown (9) on flask (10) which assembles the flange (6) on the said distance part (1) and brings the unitized body (3). The rotation of the shaft (8), by means of the conical gears (11 and 12), brings the mobile flange (5) into progressive closure by advancing movement of the threaded part (13) of shaft (14) which supports it in the axial duct (15) of the other flange (6) and successiely in the coil duct (16) of the gear (12). In this way it is determined, by expansion outwards of the elastic ring (4) between the slanting walls in opened position of the two pressure flanges (5 and 6), the hermetic seal blocking of the duct.

2. Duct shutter device for work on operating gas canalizations, as per claim 1), characterized by the fact that to take it away, the shaft (8) is set in rotation in the opposite dirction by opening the mobile flange (5) and since the shaft (14) is prevented from getting out from the coil duct (16) by a limit control (17).

3. Duct shutter device for work on operating gas canalizations, as per claim 1), characterized by the fact that for driving the shaft (8) a wheel (18) has been foreseen in position.

FIG.1

FIG.2

4

European
Patent Office

EUROPEAN SEARCH
REPORT

Application Number

EP 90 83 0402

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 148 735   (STIG, WESTMAN)<br>* Figures 2,3,4; claims 1,5 *<br>– – – | 1,2,3 | F 16 L 55/124 |
| Y | DE-A-3 120 183   (LEYBOLD-HERAEUS GmbH)<br>* Figure 1; claims 1,2 *<br>– – – | 1,2,3 | |
| A | US-A-3 052 265   (NEVILL)<br>* Figure 2 *<br>– – – | 1 | |
| A | AU-B-85 798   (BOUNDY)(1975)<br>* Figure 5 *<br>– – – | 1 | |
| A | US-A-2 588 188   (WEISMAN)<br>* Figure 2 *<br>– – – – – | 1 | |

TECHNICAL FIELDS
SEARCHED (Int. Cl.5)

F 16 L

The present search report has been drawn up for all claims

| Place of search | Date of completion of search | Examiner |
|---|---|---|
| The Hague | 09 April 91 | BUDTZ-OLSEN A. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons
-------------------------------------------------------------------
& : member of the same patent family, corresponding
document